# EUROPÄISCHE PATENTANMELDUNG

(11) **EP 4 696 899 A1**
(43) Veröffentlichungstag der Anmeldung: **18.02.2026**
(21) Anmeldenummer: 25187513.4
(22) Anmeldetag: 04.07.2025
(51) Int. Cl.: F16C 27/06, F16C 35/02, F16C 35/077

(54) **LOSLAGERSITZ UND LAGERVORRICHTUNG**

(30) Priorität: 13.08.2024 DE 102024123033
(71) Anmelder: Miele & Cie. KG, 33332 Gütersloh (DE)
(72) Erfinder: Kratz, Timo, 53881 Euskirchen (DE)

(57) **Zusammenfassung**

Die Erfindung betrifft einen Loslagersitz (8) für ein Loslager (10) einer Lagervorrichtung (2) zur Lagerung einer Welle (4), wobei einerseits das Loslager (10) einen dem Loslagersitz (8) zugeordneten Außenring (12) und einen der Welle (4) zugeordneten Innenring (14) und andererseits der Loslagersitz (8) einen Lageraufnahmeraum (16) mit einer Tiefenausdehnung entlang einer Lagerachse (20) des in dem Loslagersitz (8) angeordneten Loslagers (10) und einer senkrecht zu dieser Lagerachse (20) verlaufenden Ausdehnung zur Aufnahme des Loslagers (10) aufweist, wobei der Lageraufnahmeraum (16) senkrecht zur Lagerachse (20) mittels einer Seitenwand (18) mit einer dem Lageraufnahmeraum (16) zugewandten Seitenfläche begrenzt ist, dadurch gekennzeichnet, dass in der Seitenwand (18) mindestens eine Vertiefung (24) derart angeordnet ist, dass die Seitenfläche ausgehend von einer Basis (26) der Seitenfläche bei der Vertiefung (24) in Gegenrichtung zu dem Lageraufnahmeraum (16) zurückspringt, so dass mittels der Vertiefung (24) eine Ausgleichsmasse (28) zur Fixierung des Außenrings (12) des Loslagers (10) in Umfangsrichtung des Außenrings (12) aufnehmbar ist.

## Beschreibung

Die Erfindung betrifft einen Loslagersitz der im Oberbegriff des Patentanspruchs 1 genannten Art und eine Lagervorrichtung zur Lagerung einer Welle.

Derartige Loslagersitze und Lagervorrichtungen zur Lagerung einer Welle sind aus dem Stand der Technik in einer Vielzahl von Ausführungsformen bereits vorbekannt, wobei einerseits das Loslager einen dem Loslagersitz zugeordneten Außenring und einen der Welle zugeordneten Innenring und andererseits der Loslagersitz einen Lageraufnahmeraum mit einer Tiefenausdehnung entlang einer Lagerachse des in dem Loslagersitz angeordneten Loslagers und einer senkrecht zu dieser Lagerachse verlaufenden Ausdehnung zur Aufnahme des Loslagers aufweist, und wobei der Lageraufnahmeraum senkrecht zur Lagerachse mittels einer Seitenwand mit einer dem Lageraufnahmeraum zugewandten Seitenfläche begrenzt ist.

Der Erfindung stellt sich somit das Problem, einen Loslagersitz und eine Lagervorrichtung zu verbessern.

Erfindungsgemäß wird dieses Problem durch einen Loslagersitz mit den Merkmalen des Patentanspruchs 1 gelöst, der dadurch gekennzeichnet ist, dass in der Seitenwand mindestens eine Vertiefung derart angeordnet ist, dass die Seitenfläche ausgehend von einer Basis der Seitenfläche bei der Vertiefung in Gegenrichtung zu dem Lageraufnahmeraum zurückspringt, so dass mittels der Vertiefung eine Ausgleichsmasse zur Fixierung des Außenrings des Loslagers in Umfangsrichtung des Außenrings aufnehmbar ist. Ferner wird dieses Problem durch eine Lagervorrichtung mit den Merkmalen des Patentanspruchs 4 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Loslagersitz ist. Aufgrund der erfindungsgemäßen Ausbildung des Loslagersitzes ist einerseits eine laufruhige schwimmende Lagerung und andererseits eine prozesssichere Montage des Loslagers auf konstruktiv und fertigungstechnisch einfache Art und Weise ermöglicht, ohne dass eine zulässige Montagemaximalkraft für das Loslager überschritten wird. Üblicherweise haben Lagerungen von Wellen ein Festlager und ein Loslager. Für einen ruhigen Lauf wird das Loslager gegen das Festlager angestellt, zum Beispiel mittels einer Loslagerausgleichscheibe. Für einen ruhigen Lauf wird zusätzlich eine enge Spielpassung zwischen dem Lagersitz des Loslagers und dem Außenring des Loslagers gewählt. Diese Spielpassung wird zur leichten Montage benötigt. Die Spielpassung ermöglicht es jedoch dem Außenring des Loslagers, sich durch Vibrationen um die eigene Achse zu drehen, sodass dieser sich in den Loslagersitz eingräbt.

Für einen ruhigen Lauf wird der durch die Spielpassung bedingte Spalt deshalb üblicherweise zum Beispiel mit weichem Klebstoff gefüllt oder es wird ein Loslager mit einem O-Ring aus Gummi, der in einer Nut des Außenrings des Loslagers angeordnet ist, verwendet. Derartige Loslager werden als bereifte Loslager bezeichnet. In kreisrunden oder kreisrund abgestuften Lagersitzen gibt es dabei das Problem, dass bei der Montage des bereiften Loslagers die Montagekraft die zulässige Axialkraft des bereiften Loslagers übersteigt oder dass die Kraft aus einer zu engen Pressung des O-Rings höher als die Axialkraft der Loslagerausgleichscheibe ist. Andererseits ist die Verwendung von Klebstoff mit einem aufwändigen Klebeprozess sowie einer hohen Störanfälligkeit einer Klebung verbunden. Störanfälligkeit bedeutet hier, dass die flexible Klebstoffverbindung beispielsweise zu hart werden kann, sodass die Loslagerausgleichscheibe bei Temperaturschwankungen und einer damit einhergehenden Längenausdehnung die Loslagerung nicht mehr flexibel axial anstellen kann. Hier schafft die Erfindung Abhilfe.

Grundsätzlich ist der erfindungsgemäße Loslagersitz nach Art, Funktionsweise, Material und Dimensionierung in weiten geeigneten Grenzen frei wählbar. Gleiches gilt für die erfindungsgemäße Lagervorrichtung.

Eine besonders vorteilhafte Weiterbildung des erfindungsgemäßen Loslagersitzes sieht vor, dass die mindestens eine Vertiefung als eine Mehrzahl von Vertiefungen ausgebildet ist, wobei die Vertiefungen in Umfangsrichtung gleichmäßig über die Seitenfläche verteilt an der Seitenwand angeordnet sind, bevorzugt, dass die Vertiefungen in Umfangsrichtung derart angeordnet und dimensioniert sind, dass die Vertiefungen und in Umfangsrichtung zu den Vertiefungen gleichlange Abschnitte der Basis der Seitenfläche abwechselnd angeordnet sind. Auf diese Weise ist die mechanische Belastung der Ausgleichsmasse in Umfangsrichtung des Außenrings gleichmäßig über den Umfang des Außenrings verteilt. Dies gilt besonders für die bevorzugte Ausführungsform dieser Weiterbildung. Die Notwendigkeit für die Vertiefungen kann sich daraus ergeben, dass Elastomere/GummiMaterialien nicht kompressibel sind. Überschüssiges Volumen braucht dann einen Ausweichraum, ansonsten kann die Kraft in einer Engstelle progressiv ansteigen.

Eine weitere vorteilhafte Weiterbildung des erfindungsgemäßen Loslagersitzes sieht vor, dass der Lageraufnahmeraum mittels einer Deckplatte des Loslagersitzes entlang der Lagerachse einseitig begrenzt ist, bevorzugt, dass die Deckplatte die mindestens eine Vertiefung einseitig verschließt, besonders bevorzugt, dass die Deckplatte eine zentrale Durchgangsöffnung aufweist. Hierdurch ist der Lageraufnahmeraum auf konstruktiv und fertigungstechnisch einfache Art und Weise zumindest teilweise einseitig verschließbar und damit vor Schmutzeintrag geschützt. Die bevorzugte Ausführungsform hat ferner den Vorteil, dass die mindestens eine Vertiefung senkrecht zu der Lagerachse eine einseitige Begrenzungswand aufweist, so dass beispielsweise in die Vertiefung eingebrachte Ausgleichsmasse nicht in ungewünschter Weise aus dem Lagersitz austreten kann. Darüber hinaus hat die besonders bevorzugte Ausführungsform dieser Weiterbildung den Vorteil, dass sich die mittels der Lagervorrichtung gelagerte Welle entlang der Lagerachse über die Deckplatte hinaus erstrecken kann.

Eine vorteilhafte Weiterbildung der erfindungsgemäßen Lagervorrichtung sieht vor, dass die Lagervorrichtung derart ausgebildet ist, dass die Ausgleichsmasse vor dem Einsetzen des Loslagers in den Loslagersitz an dem Außenring anordenbar ist und gemeinsam mit dem Loslager in den Loslagersitz einsetzbar ist. Hierdurch ist eine Vorkonfektion des Loslagers möglich, so dass das Loslager mit der an dessen Außenring angeordneten Ausgleichsmasse gemeinsam in den Lagersitz einbaubar ist.

Ferner sieht eine weitere vorteilhafte Weiterbildung der erfindungsgemäßen Lagervorrichtung vor, dass die Ausgleichsmasse als ein Elastomer ausgebildet ist, bevorzugt, dass die Ausgleichsmasse als ein O-Ring ausgebildet ist. Auf diese Weise ist die kraftübertragende Anordnung der Ausgleichsmasse an dem Außenring des Loslagers auf besonders einfache Art ermöglicht. Beispielsweise ist der O-Ring, wie auch bei herkömmlichen O-Ringen üblich, in einer in dem Außenring angeordneten Nut positionierbar.

Grundsätzlich sind auch andere Querschnittsformen, wie oval, quadratisch, rechteckig, x-förmig etc. für die Ausgleichsmasse/den entsprechenden Ring denkbar.

Ein Ausführungsbeispiel der Erfindung ist in den Zeichnungen rein schematisch dargestellt und wird nachfolgend näher beschrieben. Es zeigt
- Figur 1: eine perspektivische Ansicht eines O-Rings vor der Montage und Teile der erfindungsgemäßen Lagervorrichtung,
- Figur 1a: ein Ausführungsbeispiel der erfindungsgemäßen Lagervorrichtung mit dem erfindungsgemäßen Loslagersitz in einer teilweisen, perspektivischen Ansicht,
- Figur 1b: die Ausgleichsmasse des Ausführungsbeispiels in einer vergrößerten, teilweisen Abwicklung mit Blickrichtung entlang der Lagerachse,
- Figur 2: das Ausführungsbeispiel gemäß der Fig. 1a in einer vergrößerten Detailansicht im Bereich des Loslagers,
- Figur 3: den Loslagersitz des Ausführungsbeispiels in einer perspektivischen Darstellung, und
- Figur 4: den Loslagersitz gemäß der Fig. 3 in einer vergrößerten Detailansicht.

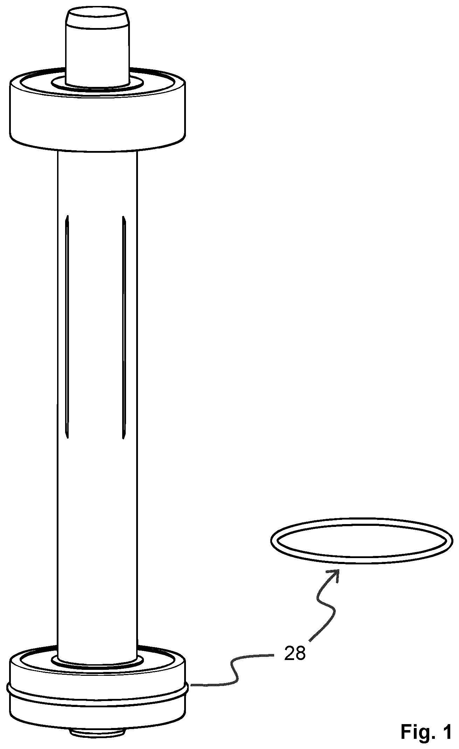

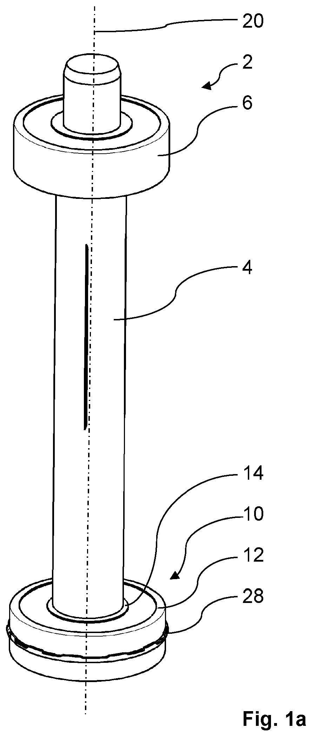

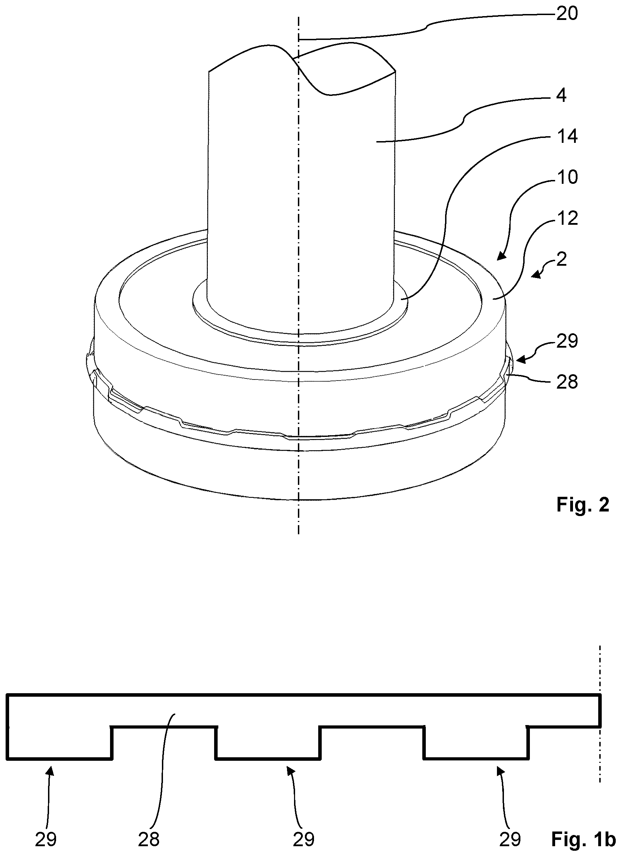

In den Fig. 1 bis 4 ist ein Ausführungsbeispiel der erfindungsgemäßen Lagervorrichtung mit dem erfindungsgemäßen Loslagersitz rein exemplarisch dargestellt.

Die Lagervorrichtung 2 ist zur Lagerung einer Welle 4 eines nicht näher dargestellten Staubsaugers ausgebildet, wobei die Lagervorrichtung 2 ein in einem nicht dargestellten Festlagersitz der Lagervorrichtung 2 angeordnetes Festlager 6 und ein in einem Loslagersitz 8 der Lagervorrichtung 2 angeordnetes Loslager 10 mit einem dem Loslagersitz 8 zugeordneten Außenring 12 und einem der Welle 4 zugeordneten Innenring 14 aufweist.

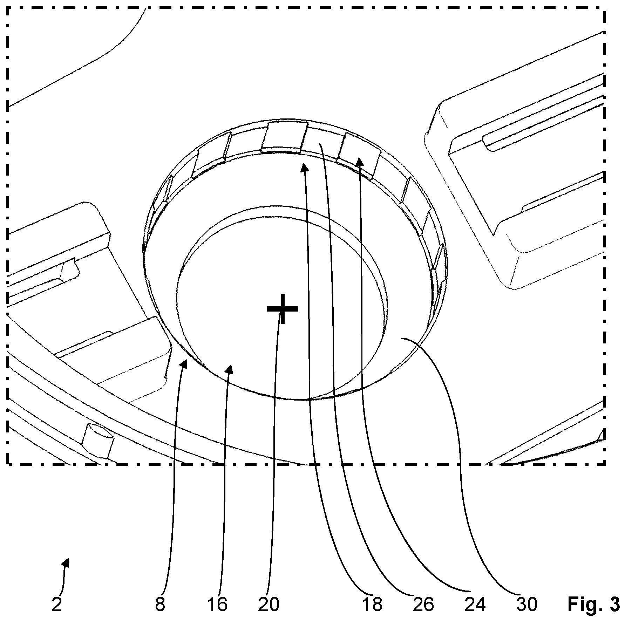

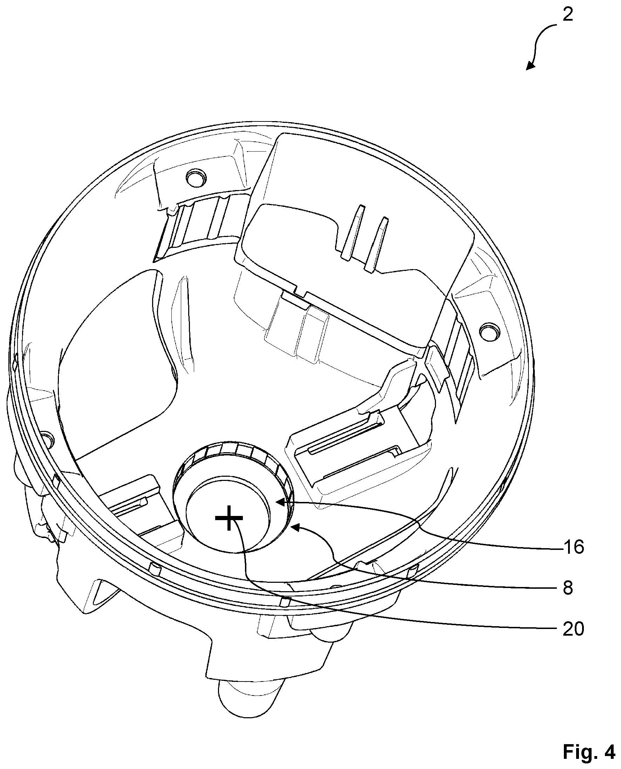

Der Loslagersitz 8 weist zur Aufnahme des Loslagers 10 einen Lageraufnahmeraum 16 mit einer Tiefenausdehnung entlang einer Lagerachse 20 des in dem Loslagersitz 8 angeordneten Loslagers 10 und einer senkrecht zu dieser Lagerachse 20 verlaufenden Ausdehnung auf, wobei der Lageraufnahmeraum 16 senkrecht zur Lagerachse 20 mittels einer Seitenwand 18 mit einer dem Lageraufnahmeraum 16 zugewandten Seitenfläche begrenzt ist. Die Lagerachse 20 ist in den Fig. 1a und 2 mit einer punktgestrichelten Linie und in der Fig. 3 und 4 mit einem Kreuz symbolisiert.

Erfindungsgemäß ist in der Seitenwand 18 mindestens eine Vertiefung, nämlich eine Mehrzahl von Vertiefungen 24, derart angeordnet, dass die Seitenfläche ausgehend von einer Basis 26 der Seitenfläche bei den Vertiefungen 24 in Gegenrichtung zu dem Lageraufnahmeraum 16 zurückspringt, so dass mittels der Vertiefungen 24 eine Ausgleichsmasse 28 zur Fixierung des Außenrings 12 des Loslagers 10 in Umfangsrichtung des Außenrings 12 aufnehmbar ist. Der Außenring 12 ist mittels der in den Vertiefungen 24 angeordneten Ausgleichsmasse 28 der Lagervorrichtung 2 in Umfangsrichtung des Außenrings 12 an dem Loslagersitz 8 fixiert.

Die Vertiefungen 24 sind in Umfangsrichtung gleichmäßig über die Seitenfläche verteilt an der Seitenwand 18 angeordnet, wobei die Vertiefungen 24 in Umfangsrichtung derart angeordnet und dimensioniert sind, dass die Vertiefungen 24 und in Umfangsrichtung zu den Vertiefungen 24 gleichlange Abschnitte der Basis 26 der Seitenfläche abwechselnd angeordnet sind. Siehe hierzu die Fig. 3 und 4.

Der Lageraufnahmeraum 16 ist mittels einer senkrecht zur Lagerachse 20 angeordneten Deckplatte 30 des Loslagersitzes 8 entlang der Lagerachse 20 einseitig begrenzt, wobei die Deckplatte 30 hier die Vertiefungen 24 einseitig verschließt, und wobei die Deckplatte 30 eine zentrale Durchgangsöffnung für die Welle 4 aufweist.

Die Lagervorrichtung 2 ist bei dem vorliegenden Ausführungsbeispiel derart ausgebildet, dass die Ausgleichsmasse 28 vor dem Einsetzen des Loslagers 10 in den Loslagersitz 8 an dem Außenring 12 anordenbar ist und gemeinsam mit dem Loslager 10 in den Loslagersitz 8 einsetzbar ist. Die Ausgleichsmasse 28 ist hier als ein Elastomer, nämlich als ein kreisrunder und symmetrischer O-Ring, ausgebildet. Den Zustand vor der Montage, in dem der O-Ring kreisrund und symmetrisch ist, zeigt die Fig. 1. Der in den Figuren 1a und 1b gezeigte Zustand nach der Montage weist zu den Vertiefungen 24 korrespondierende bzw. durch die Vertiefungen 24 entstehende Vorsprünge 29 auf. D.h. es muss hier beachtet werden, dass sich diese Form des O-Rings 28 erst durch die hier der Sichtbarkeit halber nicht dargestellten Teile der Lagervorrichtung 2 ergibt, wenn der O-Ring 28 nach der Montage so deformiert wird, dass die Vertiefungen 24 von dem Elastomer ausgefüllt werden.

Nachfolgend wird die Funktionsweise der erfindungsgemäßen Lagervorrichtung mit dem erfindungsgemäßen Loslagersitz gemäß dem vorliegenden Ausführungsbeispiel anhand der Fig. 1 bis 4 näher erläutert.

Zunächst befindet sich die Lagervorrichtung 2 in einem Demontagezustand, in dem die als O-Ring ausgebildete Ausgleichsmasse 28 noch nicht mit dem Loslager 10 kraftübertragend verbunden ist, wie in Figur 1 dargestellt. Ein nicht dargestellter Monteur ergreift die als O-Ring ausgebildete und in der Fig. 1b einzeln dargestellte Ausgleichsmasse 28 und setzt diese auf dem Fachmann an sich bekannte Art und Weise in eine nicht dargestellte Nut in dem Außenring 12 des Loslagers 10 ein. Das Loslager 10 ist hier also als ein bereiftes Loslager ausgebildet. Siehe hierzu die Fig. 1a und 2. Nachfolgend wird das Loslager 10, beispielsweise in der aus der Fig. 1a ersichtlichen Anordnung, in den Lageraufnahmeraum 16 des Loslagersitzes 8 eingesetzt.

Aufgrund der erfindungsgemäßen Ausbildung des Loslagersitzes 8 und der Lagervorrichtung 2 ist somit einerseits eine laufruhige schwimmende Lagerung und andererseits eine prozesssichere Montage des Loslagers 10 auf konstruktiv und fertigungstechnisch einfache Art und Weise ermöglicht, ohne dass eine zulässige Montagemaximalkraft für das Loslager 10 überschritten wird. Für einen ruhigen Lauf wird das Loslager 10, wie beim Stand der Technik üblich, gegen das Festlager 6 angestellt, zum Beispiel mittels einer nicht dargestellten Loslagerausgleichscheibe. Für einen ruhigen Lauf wird zusätzlich eine enge Spielpassung zwischen dem Lagersitz 8 des Loslagers 10 und dem Außenring 12 des Loslagers 10 gewählt. Diese Spielpassung wird zur leichten Montage benötigt. Die Spielpassung würde es dem Außenring 12 des Loslagers 10 ohne der als O-Ring ausgebildeten Ausgleichsmasse 28 jedoch ermöglichen, sich durch Vibrationen um die Lagerachse 20 zu drehen, sodass sich der Außenring 12 in den Loslagersitz 8 eingraben würde. Dies wird durch die als O-Ring ausgebildete Ausgleichsmasse 28 wirksam verhindert. Ferner ist das Problem, dass bei dem kreisrunden Loslagersitz 8 bei der Montage des bereiften Loslagers 10 die Montagekraft die zulässige Axialkraft des bereiften Loslagers 10 übersteigen könnte, hier mittels der aufeinander abgestimmten Ausbildung des Loslagers 10 mit der als O-Ring ausgebildeten Ausgleichsmasse 28 und der die Vertiefungen 24 aufweisenden Seitenwand 18 des Loslagersitzes 8 wirksam gelöst. Auch kann auf die aufwändige und störanfällige Verwendung von Klebstoff verzichtet werden. Siehe hierzu die diesbezüglichen Ausführungen in der Beschreibungseinleitung.

Die Erfindung ist jedoch nicht auf das vorliegende Ausführungsbeispiel beschränkt. Beispielsweise ist die Erfindung auch für andere Haushaltsgeräte oder dergleichen vorteilhaft einsetzbar.

## Patentansprüche

1. Loslagersitz (8) für ein Loslager (10) einer Lagervorrichtung (2) zur Lagerung einer Welle (4), wobei einerseits das Loslager (10) einen dem Loslagersitz (8) zugeordneten Außenring (12) und einen der Welle (4) zugeordneten Innenring (14) und andererseits der Loslagersitz (8) einen Lageraufnahmeraum (16) mit einer Tiefenausdehnung entlang einer Lagerachse (20) des in dem Loslagersitz (8) angeordneten Loslagers (10) und einer senkrecht zu dieser Lagerachse (20) verlaufenden Ausdehnung zur Aufnahme des Loslagers (10) aufweist, wobei der Lageraufnahmeraum (16) senkrecht zur Lagerachse (20) mittels einer Seitenwand (18) mit einer dem Lageraufnahmeraum (16) zugewandten Seitenfläche begrenzt ist, **dadurch gekennzeichnet, dass** in der Seitenwand (18) mindestens eine Vertiefung (24) derart angeordnet ist, dass die Seitenfläche ausgehend von einer Basis (26) der Seitenfläche bei der Vertiefung (24) in Gegenrichtung zu dem Lageraufnahmeraum (16) zurückspringt, so dass mittels der Vertiefung (24) eine Ausgleichsmasse (28) zur Fixierung des Außenrings (12) des Loslagers (10) in Umfangsrichtung des Außenrings (12) aufnehmbar ist.

2. Loslagersitz (8) nach Anspruch 1, **dadurch gekennzeichnet, dass** die mindestens eine Vertiefung (24) als eine Mehrzahl von Vertiefungen (24) ausgebildet ist, wobei die Vertiefungen (24) in Umfangsrichtung gleichmäßig über die Seitenfläche verteilt an der Seitenwand (18) angeordnet sind, bevorzugt, dass die Vertiefungen (24) in Umfangsrichtung derart angeordnet und dimensioniert sind, dass die Vertiefungen (24) und in Umfangsrichtung zu den Vertiefungen (24) gleichlange Abschnitte der Basis (26) der Seitenfläche abwechselnd angeordnet sind.

3. Loslagersitz (8) nach Anspruch 1 oder 2, **dadurch gekennzeichnet, dass** der Lageraufnahmeraum (16) mittels einer Deckplatte (30) des Loslagersitzes (8) entlang der Lagerachse (20) einseitig begrenzt ist, bevorzugt, dass die Deckplatte (30) die mindestens eine Vertiefung (24) einseitig verschließt, besonders bevorzugt, dass die Deckplatte (30) eine zentrale Durchgangsöffnung aufweist.

4. Lagervorrichtung (2) zur Lagerung einer Welle (4), wobei die Lagervorrichtung (2) ein in einem Festlagersitz der Lagervorrichtung (2) angeordnetes Festlager (6) und ein in einem Loslagersitz (8) der Lagervorrichtung (2) angeordnetes Loslager (10) mit einem dem Loslagersitz (8) zugeordneten Außenring (12) und einem der Welle (4) zugeordneten Innenring (14) aufweist, **dadurch gekennzeichnet, dass** der Loslagersitz (8) nach einem der Ansprüche 1 bis 3 ausgebildet ist und der Außenring (12) mittels einer zumindest in der mindestens einen Vertiefung (24) angeordneten Ausgleichsmasse (28) der Lagervorrichtung (2) in Umfangsrichtung des Außenrings (12) an dem Loslagersitz (8) fixiert ist.

5. Lagervorrichtung (2) nach Anspruch 4, **dadurch gekennzeichnet, dass** die Lagervorrichtung (2) derart ausgebildet ist, dass die Ausgleichsmasse (28) nach dem Einsetzen des Loslagers (10) in den Loslagersitz (8) zwischen dem Außenring (12) und der Seitenfläche der Seitenwand (18) einbringbar ist.

6. Lagervorrichtung (2) nach Anspruch 4, **dadurch gekennzeichnet, dass** die Lagervorrichtung (2) derart ausgebildet ist, dass die Ausgleichsmasse (28) vor dem Einsetzen des Loslagers (10) in den Loslagersitz (8) an dem Außenring (12) anordenbar ist und gemeinsam mit dem Loslager (10) in den Loslagersitz (8) einsetzbar ist.

7. Lagervorrichtung (2) nach einem der Ansprüche 4 bis 6, **dadurch gekennzeichnet, dass** die Ausgleichsmasse (28) als ein Elastomer ausgebildet ist, bevorzugt, dass die Ausgleichsmasse (28) als ein O-Ring ausgebildet ist.
